# EUROPEAN PATENT APPLICATION

(11) **EP 4 286 558 A1**
(43) Date of publication of application: **06.12.2023**
(21) Application number: 21923396.2
(22) Date of filing: 25.11.2021
(51) Int. Cl.: C25B 15/08, C25B 1/04

(54) **WATER ELECTROLYSIS APPARATUS**

(30) Priority: 29.01.2021 KR 20210013043
(71) Applicant: Techwin Co., Ltd., Cheongju-si, Chungcheongbuk-do 28580 (KR)
(72) Inventor: KIM, Jung Sik, Sejong-si 30098 (KR); SHIN, Hyun Su, Daejeon 34390 (KR); HYUN, Jun Teak, Cheongju-si Chungcheongbuk-do 28124 (KR); HYUN, Sun Teak, Cheongju-si Chungcheongbuk-do 28582 (KR)
(74) Representative: Plasseraud IP
(86) International application number: PCT/KR2021/017447
(87) International publication number: WO 2022/163987

(57) **Abstract**

The present invention relates to a water electrolysis apparatus comprising a diaphragm for removing dissolved gas in an electrolyte, wherein the dissolved gas present in the electrolyte is separated through a diaphragm provided in a gas-liquid separator or an electrolyte circulation line, thereby preventing the gas composition in a gas phase region in the water electrolysis apparatus from reaching a limit of explosion while increasing the efficiency of production of the dissolved gas in the electrolyte.

## Description

### [Technical Field]

The present disclosure relates to a water electrolysis apparatus including a diaphragm for removing a dissolved gas from an electrolyte.

### [Background Art]

Water electrolysis technology, which is a typical hydrogen production technology, is a technology for directly producing hydrogen from water using electrical energy and allows high-purity hydrogen to be produced in an eco-friendly manner. The water electrolysis technology is classified into alkaline water electrolysis, polymer electrolyte membrane water electrolysis, and solid oxide water electrolysis.

Among the above water electrolysis technologies, the alkaline water electrolysis technology has advantages that costs are low and large-capacity hydrogen production is possible. An alkaline water electrolysis apparatus consists of an electrolytic cell configured to produce hydrogen, a gas-liquid separator configured to separate gas-phase hydrogen or oxygen, discharged from the electrolytic cell, from an electrolyte, an electrolyte storage tank configured to store a liquid discharged from the gas-liquid separator and input the liquid back into the electrolytic cell, and a balance of plant configured to appropriately supply the electrolyte and control and manage power.

Also, the electrolytic cell consists of an electrolyte, a separation membrane, and an anode and a cathode which are electrodes, and the following reactions occur at the anode and the cathode:

Anode: 2OH⁻ → 1/2O₂ + H₂O + 2e⁻

Cathode: 2H₂O + 2e⁻ → H₂ + 2OH⁻

An electrolyte containing dissolved oxygen gas produced by the above reaction is separated into an oxygen gas and an electrolyte through an anode-side gas-liquid separator in an anode chamber of the electrolytic cell, and an electrolyte containing dissolved hydrogen gas produced by the above reaction is separated into a hydrogen gas and an electrolyte through a cathode-side gas-liquid separator in a cathode chamber of the electrolytic cell.

Here, in hydrogen production using the alkaline water electrolysis, there is a problem in terms of dissolved gas. That is, some of the oxygen gas generated in the anode reaction is dissolved in the electrolyte recovered from the anode chamber of the electrolytic cell, and some of the hydrogen gas generated in the cathode reaction is dissolved in the electrolyte recovered from the cathode chamber. Here, the oxygen gas dissolved in the electrolyte and the hydrogen gas dissolved in the electrolyte are concepts encompassing states in which the oxygen gas and the hydrogen gas are dissolved in the electrolyte and states in which the oxygen gas and the hydrogen gas remain in the form of microbubbles. Since the electrolyte recovered from the anode chamber and the electrolyte recovered from the cathode chamber are mixed in the electrolyte storage tank, both the oxygen gas and the hydrogen gas are dissolved in the electrolyte in the electrolyte storage tank. Since the oxygen gas and the hydrogen gas dissolved in the electrolyte in the electrolyte storage tank are slowly released while in a gas phase, the concentrations of the oxygen gas and the hydrogen gas slowly increase in a gas phase portion of an upper portion of the electrolyte storage tank. Accordingly, there is a concern that, while the operation of the water electrolysis apparatus continues, a gas composition may reach an explosive limit in the gas phase portion of the upper portion of the electrolyte storage tank.

Japanese Unexamined Patent Application Publication No. 2017-039982 relating to a water electrolysis apparatus for generating hydrogen gas (hereinafter briefly referred to as "Patent Document 1") discloses a water electrolysis apparatus including an anode chamber configured to accommodate an anode and generate an anode gas, a cathode chamber configured to accommodate a cathode and generate a hydrogen gas, a diaphragm configured to separate the anode chamber and the cathode chamber, and an anode-side circulation line configured to simultaneously discharge and return an electrolyte from and to the anode chamber, wherein the anode-side circulation line includes an anode-side gas-liquid separator configured to separate the anode gas from the electrolyte, an anode-side discharge line configured to connect the anode chamber and the anode-side gas-liquid separator and discharge the electrolyte and the anode gas from the anode chamber to feed the electrolyte and the anode gas into the anode-side gas-liquid separator, and an anode-side supply line configured to connect the anode chamber and the anode-side gas-liquid separator and discharge the electrolyte from the anode-side gas-liquid separator to feed the electrolyte into the anode chamber and has an anode gas feed line configured to connect the anode-side gas-liquid separator and a gas phase region in which the hydrogen gas dissolved in the electrolyte is present in a gas phase and the hydrogen gas and the anode gas are mixed, the anode gas feed line feeds at least some of the anode gas to the gas phase region, and a concentration of the hydrogen gas in the gas phase region is lower than a lower explosive limit. The water electrolysis apparatus of Patent Document 1 is described as being able to address the possibility that a trace amount of hydrogen gas may gradually accumulate in a circulation line of the electrolyte and reach an explosive limit of hydrogen.

However, it is described in Patent Document 1 that a gas discharged from a gas phase region of an electrolyte storage tank is released to the outside of the system, and in a case in which the gas in the gas phase region of the electrolyte storage tank is purged using the anode gas and then discharged, there is a problem that, even when the discharged gas is recovered, it is difficult to obtain a high-purity gas.

Meanwhile, in a case in which the electrolyte recovered from the anode chamber and the electrolyte recovered from the cathode chamber are stored and circulated in different electrolyte storage tanks, there is a problem that, due to a difference in the number of moles consumed in the anode reaction and the cathode reaction, a difference occurs between concentrations in the anode-side electrolyte storage tank and the cathode-side electrolyte storage tank.

In a case in which a communication pipe is additionally installed in a liquid phase region of the anode-side electrolyte storage tank and a liquid phase region of the cathode-side electrolyte storage tank in order to prevent the occurrence of a difference between a liquid level in the anode-side electrolyte storage tank and a liquid level in the cathode-side electrolyte storage tank, since an electrolyte introduced through the communication pipe contains a dissolved gas, there is a concern that a gas composition in a gas phase region may reach an explosive limit in a storage tank where the electrolyte is introduced through the communication pipe.

Accordingly, there is a need for a water electrolysis apparatus that can, while preventing a gas composition in a gas phase region of an electrolyte storage tank from reaching an explosive limit, address a problem that gas production efficiency decreases due to a dissolved gas in an electrolyte.

### [Disclosure]

### [Technical Problem]

The present disclosure provides a water electrolysis apparatus that can, while preventing a gas composition in a gas phase region from reaching an explosive limit in the water electrolysis apparatus, address a problem that gas production efficiency decreases due to a dissolved gas in an electrolyte.

### [Technical Solution]

The present disclosure provides a water electrolysis apparatus including an electrolytic cell configured to include an anode chamber and a cathode chamber separated by a partition, an anode-side gas-liquid separator configured to communicate with the anode chamber, a cathode-side gas-liquid separator configured to communicate with the cathode chamber, an anode-side circulation line configured to supply an electrolyte discharged from the anode chamber to the anode-side gas-liquid separator and supply an electrolyte discharged from the anode-side gas-liquid separator to the anode chamber, a cathode-side circulation line configured to supply an electrolyte discharged from the cathode chamber to the cathode-side gas-liquid separator and supply an electrolyte discharged from the cathode-side gas-liquid separator to the cathode chamber, and a diaphragm provided in at least one of the anode-side gas-liquid separator, the cathode-side gas-liquid separator, the anode-side circulation line, and the cathode-side circulation line and configured to have an internal flow path.

In one embodiment, in the diaphragm, gas permeability may be higher than liquid permeability along a direction of the internal flow path. Also, the diaphragm may be provided so that the gas permeability is higher than the liquid permeability in a direction in which the internal flow path extends.

In one embodiment, the diaphragm may be provided to be hydrophobic and allow a dissolved gas in the electrolyte discharged from the electrolytic cell to permeate the internal flow path.

In one embodiment, the diaphragm may be porous.

In one embodiment, the diaphragm may include at least one material selected from the group consisting of polytetrafluoroethylene, polyvinylidene fluoride, polyethylene, polypropylene, polysulfone, polyimide, polyacrylonitrile, polyamide, polyphenylene sulfide, polyethersulfone, and polyester.

In one embodiment, the diaphragm may be a tubular type, a hollow fiber type, a flat plate type, or a spiral-wound type.

The diaphragm may be arranged in a form of a coil wound in a predetermined direction.

In one embodiment, the water electrolysis apparatus may further include a pressure controller configured to control a difference between a pressure of the internal flow path of the diaphragm and a pressure of an external space of the diaphragm.

In one embodiment, the pressure controller may include a pressure reducing device configured to reduce the pressure of the internal flow path in order to cause a pressure difference.

Due to the pressure controller, the pressure of the external space of the diaphragm may be higher than the pressure of the internal flow path of the diaphragm.

In one embodiment, the water electrolysis apparatus may further include a fluid supply line configured to allow communication between the internal flow path of the diaphragm and a gas phase region of at least one of the anode-side gas-liquid separator and the cathode-side gas-liquid separator, and a gas present in the gas phase region of at least one of the anode-side gas-liquid separator and the cathode-side gas-liquid separator may be supplied to the internal flow path of the diaphragm through the fluid supply line.

In one embodiment, outside air may be introduced into the internal flow path of the diaphragm.

In one embodiment, a gas-liquid separation device configured to communicate with the internal flow path of the diaphragm may be provided, and a liquid phase region of the gas-liquid separation device may communicate with at least one of the anode-side circulation line and the cathode-side circulation line.

In one embodiment, the water electrolysis apparatus may further include a gas supply line configured to allow communication between the internal flow path of the diaphragm and a liquid phase region of at least one of the anode-side gas-liquid separator and the cathode-side gas-liquid separator, and a gas present in the internal flow path of the diaphragm may be supplied to the liquid phase region of at least one of the anode-side gas-liquid separator and the cathode-side gas-liquid separator through the gas supply line.

### [Advantageous Effects]

By separating a dissolved gas present in an electrolyte through a diaphragm provided in a gas-liquid separator or an electrolyte circulation line, a water electrolysis apparatus of the present disclosure can increase the efficiency of gas production through water electrolysis while preventing a gas composition from reaching an explosive limit in a gas phase region of the water electrolysis apparatus.

### [Description of Drawings]

FIG. 1 is a configuration diagram of a water electrolysis apparatus according to one embodiment of the present disclosure.
FIG. 2 is a configuration diagram of a water electrolysis apparatus including an electrolyte storage tank according to one embodiment of the present disclosure.
FIG. 3 is a schematic diagram illustrating a cross-section of a diaphragm according to one embodiment of the present disclosure.
FIG. 4 is a configuration diagram of a water electrolysis apparatus including a fluid supply line according to one embodiment of the present disclosure.
FIG. 5 is a configuration diagram of a water electrolysis apparatus including a gas-liquid separation device according to one embodiment of the present disclosure.
FIG. 6 is a configuration diagram of a water electrolysis apparatus including a gas supply line according to one embodiment of the present disclosure.

### [Modes of the Invention]

Since various modifications may be made to the present disclosure and the present disclosure may have various embodiments, particular embodiments illustrated in the drawings will be described in detail herein.

However, it is not intended to limit the present disclosure to the particular embodiments, and all modifications, equivalents, and substitutes included in the spirit and technical scope of the present disclosure should be understood as belonging to the present disclosure.

In the present disclosure, terms such as "include" or "have" should be understood as indicating that features, numbers, steps, operations, elements, parts, or combinations thereof are present, without precluding the possibility of the presence or addition of one or more other features, numbers, steps, operations, elements, parts, or combinations thereof.

Accordingly, since configurations illustrated in the embodiments described herein are only some embodiments of the present disclosure and do not represent the entire technical spirit of the present disclosure, various equivalents and modifications that can replace the configurations may be present at the time of filing this application.

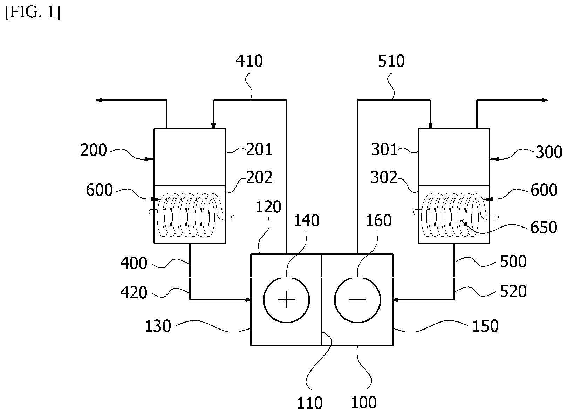

Referring to FIG. 1, a water electrolysis apparatus according to one embodiment of the present disclosure includes an electrolytic cell 100 configured to include an anode chamber 130 and a cathode chamber 150 separated by a partition 110, an anode-side gas-liquid separator 200 configured to communicate with the anode chamber 130, and a cathode-side gas-liquid separator 300 configured to communicate with the cathode chamber 150.

Also, the anode-side gas-liquid separator 200 may include a gas phase region 201 disposed at an upper portion and a liquid phase region 202 disposed at a lower portion. Also, the cathode-side gas-liquid separator 300 may include a gas phase region 301 disposed at an upper portion and a liquid phase region 302 disposed at a lower portion.

Also, the water electrolysis apparatus includes an anode-side circulation line 400 configured to supply an electrolyte discharged from the anode chamber 130 to the anode-side gas-liquid separator 200 and supply an electrolyte discharged from the anode-side gas-liquid separator 200 to the anode chamber 130 and a cathode-side circulation line 500 configured to supply an electrolyte discharged from the cathode chamber 150 to the cathode-side gas-liquid separator 300 and supply an electrolyte discharged from the cathode-side gas-liquid separator 300 to the cathode chamber 150.

Also, the water electrolysis apparatus includes a diaphragm 600 provided in at least one of the anode-side gas-liquid separator 200, the cathode-side gas-liquid separator 300, the anode-side circulation line 400, and the cathode-side circulation line 500 and configured to have an internal flow path 650 formed therein.

In this document, the water electrolysis apparatus is an apparatus for producing oxygen gas and hydrogen gas by electrolysis using an electrolyte.

The electrolytic cell 100 includes the anode chamber 130 configured to include an anode 140 and generate oxygen gas and the cathode chamber 150 configured to include a cathode 160 and generate hydrogen gas. The anode chamber 130 and the cathode chamber 150 are separated by the partition 110.

The partition 110 separates the anode chamber 130 and the cathode chamber 150 and has a gas blocking ability, and the shape or material of the partition 110 is not particularly limited.

The partition 110 may be a plate having a predetermined thickness. The partition 110 preferably has high electrolyte permeability, high ion permeability, and an excellent gas blocking ability. A material of the partition may include a polymer resin fiber and an inorganic compound. For example, a porous polymer film may be used as the material of the partition.

The anode chamber 130 and the cathode chamber 150 are each provided to have a space surrounded by the partition 110 and an outer frame 120, and an electrolyte introduced from an electrolyte supply passes through the space.

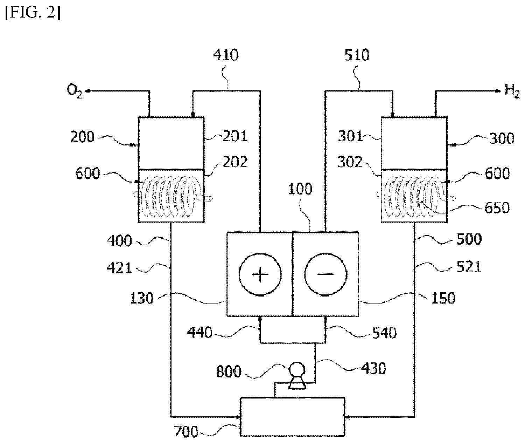

As shown in FIG. 2, the electrolyte supply may be the anode-side gas-liquid separator 200 and the cathode-side gas-liquid separator 300 or may include a separate electrolyte storage tank 700 configured to communicate with a liquid phase region of the anode-side gas-liquid separator 200 and the cathode-side gas-liquid separator 300.

The following reactions occur at the anode 140 of the anode chamber 130 and the cathode 160 of the cathode chamber 150.

Anode: 2OH⁻ → 1/2O₂ + H₂O + 2e⁻

Cathode: 2H₂O + 2e⁻ → H₂ + 2OH⁻

That is, oxygen gas is generated as hydroxyl ions (OH⁻) are consumed in the anode chamber 130, and hydrogen gas is generated as hydroxyl ions (OH⁻) are generated in the cathode chamber 150.

The anode-side gas-liquid separator 200 communicates with the anode chamber 130 through an anode recovery pipe 410 and separates the electrolyte and the oxygen gas discharged from the anode chamber 130. Here, the oxygen gas is present in the gas phase region 201 formed in the upper portion of the anode-side gas-liquid separator 200, and the electrolyte containing dissolved oxygen gas is present in the liquid phase region 202 formed in the lower portion of the anode-side gas-liquid separator 200.

The cathode-side gas-liquid separator 300 communicates with the cathode chamber 150 through a cathode recovery pipe 510 and separates the electrolyte and the hydrogen gas discharged from the cathode chamber 150. Here, the hydrogen gas is present in the gas phase region 301 formed in the upper portion of the cathode-side gas-liquid separator 300, and the electrolyte containing dissolved hydrogen gas is present in the liquid phase region 302 formed in the lower portion of the cathode-side gas-liquid separator 300.

In the present disclosure, the dissolved oxygen gas and the dissolved hydrogen gas are concepts encompassing states in which the oxygen gas and the hydrogen gas are dissolved in the electrolyte and states in which the oxygen gas and the hydrogen gas remain in the form of microbubbles.

Here, the anode recovery pipe 410 and the cathode recovery pipe 510 may communicate with the upper portion of the anode-side gas-liquid separator 200 and the upper portion of the cathode-side gas-liquid separator 300, respectively.

In the case in which the anode recovery pipe 410 and the cathode recovery pipe 510 communicate with the upper portion of the anode-side gas-liquid separator 200 and the upper portion of the cathode-side gas-liquid separator 300, respectively, the time taken for an electrolyte, which is discharged from the electrolytic cell and contains a dissolved gas, to fall onto a liquid surface inside a gas-liquid separator increases, and thus gas-liquid separation efficiency may increase.

The liquid phase region 202 of the anode-side gas-liquid separator 200 has an anode electrolyte recovery pipe 420 configured to communicate with the anode chamber 130 of the electrolytic cell 100 and supplies the electrolyte to the anode chamber 130 of the electrolytic cell 100.

The liquid phase region 302 of the cathode-side gas-liquid separator 300 has a cathode electrolyte recovery pipe 520 configured to communicate with the cathode chamber 150 of the electrolytic cell 100 and supplies the electrolyte to the cathode chamber 150 of the electrolytic cell 100.

Accordingly, the anode-side circulation line 400 includes the anode recovery pipe 410 configured to supply the electrolyte discharged from the anode chamber 130 to the anode-side gas-liquid separator 200 and the anode electrolyte recovery pipe 420 configured to supply the electrolyte discharged from the anode-side gas-liquid separator 200 to the anode chamber 130, and the cathode-side circulation line 500 includes the cathode recovery pipe 510 configured to supply the electrolyte discharged from the cathode chamber 150 to the cathode-side gas-liquid separator 300 and the cathode electrolyte recovery pipe 520 configured to supply the electrolyte discharged from the cathode-side gas-liquid separator 300 to the cathode chamber 150.

Referring to FIG. 2, the water electrolysis apparatus according to the present disclosure may further include the electrolyte storage tank 700 configured to communicate with the liquid phase regions 202 and 302 of the anode-side gas-liquid separator 200 and the cathode-side gas-liquid separator 300 through a second anode electrolyte recovery pipe 421 and a second cathode electrolyte recovery pipe 521, respectively, and communicate with the anode chamber 130 and the cathode chamber 150 of the electrolytic cell 100.

In the case in which the water electrolysis apparatus further includes the electrolyte storage tank 700, the electrolyte present in the liquid phase regions 202 and 302 of the anode-side gas-liquid separator 200 and the cathode-side gas-liquid separator 300 may be mixed in the electrolyte storage tank 700, and then the electrolyte may be supplied to the anode chamber 130 and the cathode chamber 150 of the electrolytic cell 100.

Here, the electrolyte storage tank 700 may include an electrolyte supply pipe 430 configured to supply the electrolyte to the anode chamber 130 and the cathode chamber 150 of the electrolytic cell 100, and the electrolyte supply pipe 430 may be branched into an anode electrolyte supply pipe 440 configured to communicate with the anode chamber and a cathode electrolyte supply pipe 540 configured to communicate with the cathode chamber.

Here, a circulation pump 800 configured to supply the electrolyte to the electrolytic cell may be provided in the electrolyte supply pipe 430, and the circulation pump 800 may be provided in each of the anode electrolyte supply pipe 440 and the cathode electrolyte supply pipe 540. Also, the circulation pump 800 may be installed at a rear end of the electrolytic cell.

Accordingly, in the case in which the water electrolysis apparatus according to one embodiment of the present disclosure further includes the electrolyte storage tank 700, the anode-side circulation line 400 includes the anode recovery pipe 410 configured to supply the electrolyte discharged from the anode chamber 130 to the anode-side gas-liquid separator 200, the second anode electrolyte recovery pipe 421 configured to supply the electrolyte discharged from the anode-side gas-liquid separator 200 to the electrolyte storage tank 700, and the electrolyte supply pipe 430 and the anode electrolyte supply pipe 440 which are configured to supply the electrolyte from the electrolyte storage tank 700 to the anode chamber 130. Also, the cathode-side circulation line 500 includes the cathode recovery pipe 510 configured to supply the electrolyte discharged from the cathode chamber 150 to the cathode-side gas-liquid separator 300, the second cathode electrolyte recovery pipe 521 configured to supply the electrolyte discharged from the cathode-side gas-liquid separator 300 to the electrolyte storage tank 700, and the electrolyte supply pipe 430 and the cathode electrolyte supply pipe 540 which are configured to supply the electrolyte from the electrolyte storage tank 700 to the cathode chamber 150.

The water electrolysis apparatus according to one embodiment of the present disclosure includes the diaphragm 600 provided in at least one of the anode-side gas-liquid separator 200, the cathode-side gas-liquid separator 300, the anode-side circulation line 400, and the cathode-side circulation line 500 and configured to have the internal flow path 650.

The diaphragm 600 may be configured so that liquid permeability and gas permeability are different from each other in a direction in which the internal flow path 650 extends. For example, the diaphragm may include pores, and the size of the pores may be controlled to make the liquid permeability and gas permeability different from each other. Alternatively, the size of polymer resin fibers or inorganic particles may be controlled to make the liquid permeability and gas permeability different from each other.

Specifically, in the diaphragm 600, gas permeability may be higher than liquid permeability.

The diaphragm 600 having the above characteristic may be achieved by controlling the diameter, surface area, hydrophilicity, and formation structure of pores. For example, a polymer porous membrane, an inorganic porous membrane, a woven fabric, a nonwoven fabric, or the like may be used as the diaphragm 600.

The diaphragm 600 may be provided to be hydrophobic and allow a dissolved gas in the electrolyte discharged from the electrolytic cell to permeate the internal flow path 650. That is, by having hydrophobicity, the diaphragm 600 has an affinity for the dissolved gas while making it difficult for the electrolyte to permeate. In this way, the diaphragm 600 may selectively allow only the dissolved gas in the electrolyte to permeate.

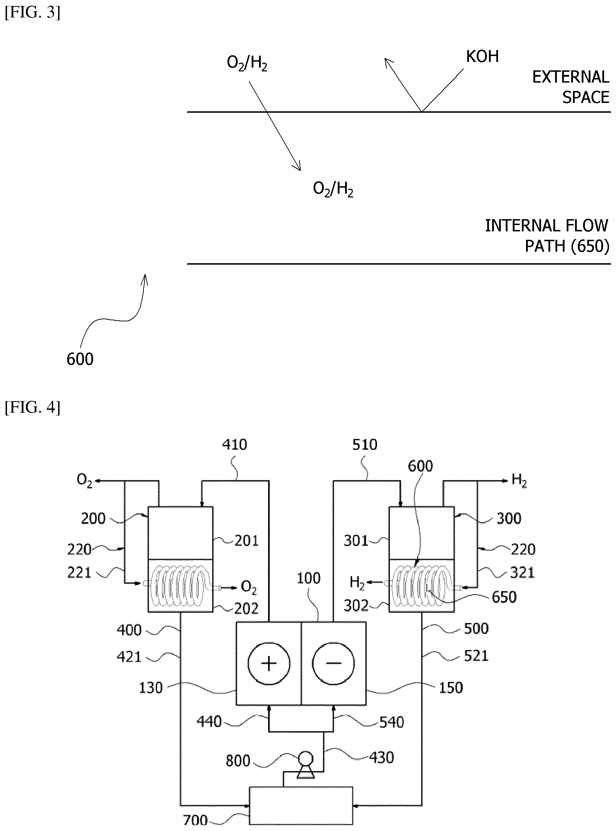

Referring to FIG. 3, although the type of electrolyte is not limited, for example, in a case in which an electrolyte is KOH, a KOH solution cannot permeate the diaphragm 600, but oxygen gas and/or hydrogen gas dissolved in the electrolyte can permeate the diaphragm 600.

The diaphragm 600 may be a porous membrane. By having porosity, the diaphragm 600 may selectively allow only the dissolved gas in the electrolyte to permeate. The pores of the diaphragm 600 may have a size in a range of 1 nm to 10 µm.

The thickness of the diaphragm 600 is not particularly limited but, for example, may be in a range of 0.1 mm to 10 mm. By controlling the size of pores of the diaphragm 600 and the thickness of the diaphragm 600, the permeate flux and selectivity may be controlled. Specifically, since the permeate flux and selectivity of the diaphragm change according to pressure outside the diaphragm, that is, pressure of an electrolyte, the size of pores, the distribution of pores, the thickness of pores, and the characteristics of the material of the diaphragm, only the dissolved gas in the electrolyte may be selectively allowed to permeate the internal flow path of the diaphragm by controlling the operating pressure of the water electrolysis apparatus, the size of pores of the diaphragm, the thickness of the diaphragm, and the characteristics of the material of the diaphragm.

The material of the diaphragm 600 may be a hydrophobic material with excellent heat resistance and durability. For example, the diaphragm may include at least one material selected from the group consisting of polytetrafluoroethylene, polyvinylidene fluoride, polyethylene, polypropylene, polysulfone, polyimide, polyacrylonitrile, polyamide, polyphenylene sulfide, polyethersulfone, and polyester and, specifically, may include at least one material selected from the group consisting of polytetrafluoroethylene, polyvinylidene fluoride, polyethylene, polypropylene, polyphenylene sulfide, polyethersulfone, and polyester.

The shape of the diaphragm 600 may be a tubular type, a hollow fiber type, a flat plate type, or a spiral-wound type.

The tubular type may have a single tube or have a bundle of tubes. The shape of the outer frame is not particularly limited but may be a cylindrical shape when a filling rate, which considers an internal shape of the tube, is taken into account.

In a case in which the tubular type has a bundle of tubes, the bundle of tubes, in which a plurality of tubes are combined, may be assembled in a mold. In a case in which the diaphragm is the tubular type, the internal flow path of the diaphragm may be a space inside a tube or a space between a tube and another tube, of which selection may be made according to the amount and pressure of the electrolyte.

The hollow fiber type may be a composite membrane or a single membrane, and in a case in which the hollow fiber type is a composite membrane, the hollow fiber type may include a hollow support body capable of supporting the membrane and an outer membrane layer. The hollow fiber type may be a form in which a composite membrane or a single membrane is formed by bundling hundreds to thousands of hollow fibers together.

In a case in which the diaphragm is the hollow fiber type, the internal flow path of the diaphragm may be a space inside a hollow fiber or a space between a hollow fiber and another hollow fiber, of which selection may be made according to the amount and pressure of the electrolyte.

The flat plate type may be used by being inserted between support bodies at both sides that serve as water channels to allow a liquid to flow. The arrangement of membranes may have a flat shape, and a membrane area may be increased by stacking the membranes and the support bodies as necessary.

The spiral-wound type, which is an envelope-like shape with a single opening, may have a flow path formed between flat membranes to allow an electrolyte to flow and may have a space between a membrane and another membrane to form the internal flow path. Alternatively, as necessary, the internal flow path may be formed between the flat membranes, and the electrolyte may be controlled to pass through the space between a membrane and another membrane.

The diaphragm 600 may have the above shape and have the internal flow path 650, the opposite surface (outer peripheral surface) of the diaphragm 600 may come in contact with the electrolyte, and the dissolved gas in the electrolyte may permeate the diaphragm 600 and may be accommodated in the internal flow path 650.

For example, the diaphragm 600 may be arranged in the form of a coil wound in a predetermined direction.

In a case in which the diaphragm 600 has the above structure, an area of the diaphragm 600 that comes in contact with the electrolyte may be increased to improve the efficiency of separating the dissolved gas from the electrolyte.

Also, the diaphragm 600 may be provided as a plurality of diaphragms 600, and in such a structure, the plurality of diaphragms may be arranged to be stacked in a predetermined direction.

In the present disclosure, in order to help understanding of the disclosure, the diaphragm 600 is illustrated as being arranged in the form of a coil wound in a predetermined direction in FIGS. 1, 2, and 4 to 6. However, the outer shape of the diaphragm is not limited thereto, and the diaphragm may be any of the tubular type, the hollow fiber type, the flat plate type, or the spiral-wound type.

Also, although, as one embodiment of the present disclosure, the diaphragm 600 is illustrated as being positioned inside the gas-liquid separators in FIGS. 1, 2, and 4 to 6, the position of the diaphragm is not limited thereto, and the diaphragm 600 may be positioned in any of the anode-side gas-liquid separator 200, the cathode-side gas-liquid separator 300, the anode-side circulation line 400, and the cathode-side circulation line 500, and a single diaphragm or a plurality of diaphragms may be installed at the corresponding position.

Referring to FIG. 3, separation of gas through the diaphragm 600 may occur due to a pressure difference between the internal flow path of the diaphragm and the external space of the diaphragm. Specifically, in a case in which the water electrolysis apparatus is operating, since the operation is performed in a state in which a predetermined pressure is applied to the water electrolysis apparatus, a pressure P of the external space of the diaphragm 600 may be maintained to be higher than a pressure P' of the internal flow path of the diaphragm, and in this way, separation of gas through the diaphragm may occur.

Also, a device configured to increase the operating pressure of the water electrolysis apparatus may be further provided to increase the difference between the pressure of the external space and the pressure of the internal flow path. A pump or a valve may be used as the device configured to increase the pressure difference.

Also, the water electrolysis apparatus may further include a pressure controller configured to control the difference between the pressure of the internal flow path of the diaphragm and the pressure of the external space of the diaphragm in order to improve and control the gas separation performance of the diaphragm.

The pressure controller may include a pressure reducing device configured to reduce the pressure of the internal flow path in order to improve the separation performance using the pressure difference. Specifically, the pressure P' of the internal flow path of the diaphragm may be controlled to be lower than the pressure P of the external space of the diaphragm in order to increase efficiency of the permeate flux and selectivity of the diaphragm. The pressure reducing device may be a vacuum pump or an orifice. The above pressure reducing device may be positioned on at least one of both ends of the internal flow path of the diaphragm. By including the pressure reducing device described above, the pressure of the internal flow path of the diaphragm may be maintained to be lower than the pressure of the outer surface of the diaphragm that comes in contact with the electrolyte, and thus it is possible to improve the selectivity and permeate flux for the dissolved gas in the electrolyte.

By including the diaphragm having the internal flow path formed therein, the water electrolysis apparatus according to one embodiment of the present disclosure can separate the dissolved gas present in the electrolyte. As a result, since different dissolved gases present in the electrolyte are mixed with each other, a potential risk of explosion due to a concentration of hydrogen gas or oxygen gas increasing beyond an explosive limit may be avoided.

Meanwhile, referring to FIG. 4, the water electrolysis apparatus according to one embodiment of the present disclosure may further include a fluid supply line 220 configured to allow communication between the internal flow path 650 of the diaphragm 600 and at least one of the gas phase region 201 of the anode-side gas-liquid separator 200 and the gas phase region 301 of the cathode-side gas-liquid separator 300, and a gas present in at least one of the gas phase region 201 of the anode-side gas-liquid separator 200 and the gas phase region 301 of the cathode-side gas-liquid separator 300 may be supplied to the internal flow path of the diaphragm through the fluid supply line 220.

That is, oxygen gas may be present in the gas phase region 201 of the anode-side gas-liquid separator 200, the oxygen gas may be, through an anode-side fluid supply line 221 connected to the internal flow path 650 of the diaphragm 600, supplied to the internal flow path of the diaphragm, and as the oxygen gas passes through the internal flow path 650, the separation efficiency of the diaphragm 600 may be increased. The oxygen gas, which has been supplied from the gas phase region 201 of the anode-side gas-liquid separator 200 and passed through the internal flow path 650 of the diaphragm 600, and dissolved oxygen gas in the electrolyte, which has permeated the diaphragm 600, may be mixed with each other in the internal flow path of the diaphragm and released to the outside of the system.

Also, hydrogen gas may be present in the gas phase region 301 of the cathode-side gas-liquid separator 300, the hydrogen gas may be, through a cathode-side fluid supply line 321 connected to the internal flow path 650 of the diaphragm 600, supplied to the internal flow path 650 of the diaphragm 600, and as the hydrogen gas passes through the internal flow path 650, the separation efficiency of the diaphragm 600 may be increased, and accordingly, the amount of produced hydrogen gas may be increased. The hydrogen gas, which has been supplied from the gas phase region 301 of the cathode-side gas-liquid separator 300 and passed through the internal flow path 650 of the diaphragm 600, and dissolved hydrogen gas in the electrolyte, which has permeated the diaphragm, may be mixed with each other in the internal flow path 650 of the diaphragm 600 and released to the outside of the system.

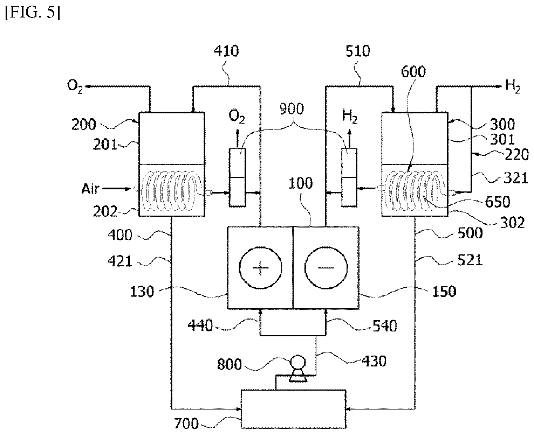

In addition to supplying the gases in the gas phase region 201 of the anode-side gas-liquid separator 200 and the gas phase region 301 of the cathode-side gas-liquid separator 300 to the internal flow path 650 of the diaphragm 600 as illustrated in FIG. 4, referring to FIG. 5, outside air may be introduced into the internal flow path 650 of the diaphragm 600. In a case in which outside air is introduced into the internal flow path of the diaphragm as described above, since additional connection to a device inside the system is not necessary, it is easy to configure the apparatus, and since a concentration of a gas can be controlled to be below an explosive limit by the introduction of outside air, safety against gas explosion can be increased.

Also, referring to FIG. 5, the water electrolysis apparatus may include a gas-liquid separation device 900 configured to, before the gas present in the internal flow path 650 of the diaphragm 600 is released to the outside of the system, communicate with the internal flow path 650 of the diaphragm, and a liquid phase region of the gas-liquid separation device 900 may communicate with at least one of the anode-side circulation line 400, the cathode-side circulation line 500, the anode-side gas-liquid separator 200, the cathode-side gas-liquid separator 300, and the electrolyte storage tank 700.

As one embodiment, in a case in which devices configured to allow the introduction of outside air and a gas, which is present in the gas phase region 201 of the anode-side gas-liquid separator 200 or the gas phase region 301 of the cathode-side gas-liquid separator 300, are provided in the internal flow path 650 of the diaphragm 600, although the internal flow path 650 is mostly occupied by the outside air and the dissolved gas in the electrolyte that has permeated the diaphragm, through the diaphragm 600, a trace amount of some of the electrolyte coming in contact with the outer surface of the diaphragm may be present. Also, some of the electrolyte may be also included as fumes or the like in the gas phase region 201 of the anode-side gas-liquid separator 200 or the gas phase region 301 of the cathode-side gas-liquid separator 300. Accordingly, some of the electrolyte may still be present in the internal flow path of the diaphragm.

In a case in which the water electrolysis apparatus has the gas-liquid separation device 900 configured to communicate with the internal flow path 650 of the diaphragm 600, some of the components of the remaining electrolyte present in the internal flow path 650 of the diaphragm 600 may be separated into a liquid phase. The electrolyte separated through the gas-liquid separation device 900 may communicate with at least one of the anode-side circulation line 400 and the cathode-side circulation line 500 in order to be reused.

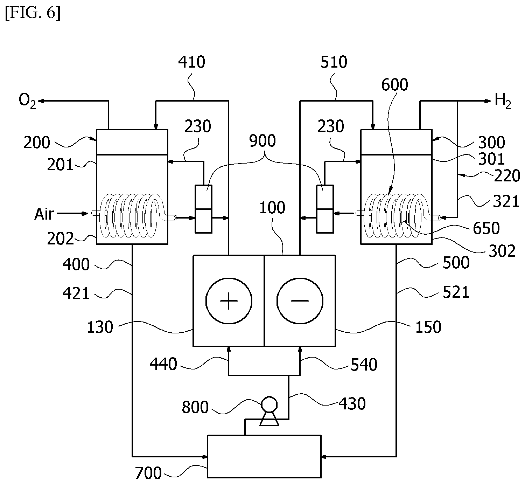

Referring to FIG. 6, the water electrolysis apparatus according to one embodiment of the present disclosure may further include a gas supply line 230 configured to allow communication between the internal flow path 650 of the diaphragm and at least one of the liquid phase region 202 of the anode-side gas-liquid separator 200 and the liquid phase region 302 of the cathode-side gas-liquid separator 300. In such a structure, a gas present in the internal flow path 650 of the diaphragm 600 may be supplied to at least one of the liquid phase region 202 of the anode-side gas-liquid separator 200 and the liquid phase region 302 of the cathode-side gas-liquid separator 300 through the gas supply line 230. Here, the gas supply line 230 connected to the internal flow path 650 of the diaphragm may be branched and configured so that one end is connected to at least one of the liquid phase region 202 of the anode-side gas-liquid separator 200 and the liquid phase region 302 of the cathode-side gas-liquid separator 300 and the other end allows some of the gas present in the internal flow path 650 of the diaphragm to be released to the outside of the system. That is, by re-supplying the gas of the internal flow path 650 of the diaphragm 600 entirely or partially to the liquid phase region of the anode-side gas-liquid separator 200 and the liquid phase region of the cathode-side gas-liquid separator 300 through the gas supply line 230, a larger amount of microbubbles may be formed in the liquid phase regions in the gas-liquid separators, and thus gas-liquid separation efficiency may be further increased.

By including the diaphragm 600, the fluid supply line 220, the gas supply line 230, and the gas-liquid separation device 900, the water electrolysis apparatus according to one embodiment of the present disclosure can improve the purity of oxygen gas and hydrogen gas produced in the water electrolysis apparatus and can improve the efficiency of oxygen gas production and hydrogen gas production in the water electrolysis apparatus.

### [Industrial Applicability]

By separating a dissolved gas present in an electrolyte through a diaphragm provided in a gas-liquid separator or an electrolyte circulation line, a water electrolysis apparatus of the present disclosure can increase the efficiency of gas production through water electrolysis while preventing a gas composition from reaching an explosive limit in a gas phase region of the water electrolysis apparatus.

## Claims

1. A water electrolysis apparatus comprising:
an electrolytic cell configured to include an anode chamber and a cathode chamber separated by a partition;
an anode-side gas-liquid separator configured to communicate with the anode chamber;
a cathode-side gas-liquid separator configured to communicate with the cathode chamber;
an anode-side circulation line configured to supply an electrolyte discharged from the anode chamber to the anode-side gas-liquid separator and supply an electrolyte discharged from the anode-side gas-liquid separator to the anode chamber;
a cathode-side circulation line configured to supply an electrolyte discharged from the cathode chamber to the cathode-side gas-liquid separator and supply an electrolyte discharged from the cathode-side gas-liquid separator to the cathode chamber; and
a diaphragm provided in at least one of the anode-side gas-liquid separator, the cathode-side gas-liquid separator, the anode-side circulation line, and the cathode-side circulation line and configured to have an internal flow path.

2. The water electrolysis apparatus of claim 1, wherein, in the diaphragm, gas permeability is higher than liquid permeability along a direction of the internal flow path.

3. The water electrolysis apparatus of claim 1, wherein the diaphragm is provided to be hydrophobic and allow a dissolved gas in the electrolyte discharged from the electrolytic cell to permeate the internal flow path.

4. The water electrolysis apparatus of claim 1, wherein the diaphragm is porous.

5. The water electrolysis apparatus of claim 1, wherein the diaphragm includes at least one material selected from the group consisting of polytetrafluoroethylene, polyvinylidene fluoride, polyethylene, polypropylene, polysulfone, polyimide, polyacrylonitrile, polyamide, polyphenylene sulfide, polyethersulfone, and polyester.

6. The water electrolysis apparatus of claim 1, wherein the diaphragm is a tubular type, a hollow fiber type, a flat plate type, or a spiral-wound type.

7. The water electrolysis apparatus of claim 6, wherein the diaphragm is arranged in a form of a coil wound in a predetermined direction.

8. The water electrolysis apparatus of claim 1, further comprising a pressure controller configured to control a difference between a pressure of the internal flow path of the diaphragm and a pressure of an external space of the diaphragm.

9. The water electrolysis apparatus of claim 8, wherein the pressure controller includes a pressure reducing device configured to reduce the pressure of the internal flow path in order to cause a pressure difference.

10. The water electrolysis apparatus of claim 8, wherein, due to the pressure controller, the pressure of the external space of the diaphragm is higher than the pressure of the internal flow path of the diaphragm.

11. The water electrolysis apparatus of claim 1, further comprising a fluid supply line configured to allow communication between the internal flow path of the diaphragm and a gas phase region of at least one of the anode-side gas-liquid separator and the cathode-side gas-liquid separator,
wherein a gas present in the gas phase region of at least one of the anode-side gas-liquid separator and the cathode-side gas-liquid separator is supplied to the internal flow path of the diaphragm through the fluid supply line.

12. The water electrolysis apparatus of claim 1, wherein outside air is introduced into the internal flow path of the diaphragm.

13. The water electrolysis apparatus of claim 1, wherein:
a gas-liquid separation device configured to communicate with the internal flow path of the diaphragm is provided; and
a liquid phase region of the gas-liquid separation device communicates with at least one of the anode-side circulation line and the cathode-side circulation line.

14. The water electrolysis apparatus of claim 1, further comprising a gas supply line configured to allow communication between the internal flow path of the diaphragm and a liquid phase region of at least one of the anode-side gas-liquid separator and the cathode-side gas-liquid separator,
wherein a gas present in the internal flow path of the diaphragm is supplied to the liquid phase region of at least one of the anode-side gas-liquid separator and the cathode-side gas-liquid separator through the gas supply line.
